(19) Europäisches Patentamt
European Patent Office
Office européen des brevets

(11) **EP 3 873 794 B1**

(12) **EUROPEAN PATENT SPECIFICATION**

(45) Date of publication and mention
of the grant of the patent:
**28.05.2025 Bulletin 2025/22**

(21) Application number: **19878372.2**

(22) Date of filing: **08.10.2019**

(51) International Patent Classification (IPC):
**B62D 35/00** (2006.01)     **B62D 37/02** (2006.01)
**H05H 1/24** (2006.01)     **F15D 1/00** (2006.01)

(52) Cooperative Patent Classification (CPC):
**B62D 35/00; H05H 1/2439;** F15D 1/0075

(86) International application number:
**PCT/US2019/055187**

(87) International publication number:
**WO 2020/091960 (07.05.2020 Gazette 2020/19)**

(54) **DRAG REDUCTION AND ENERGY GENERATION APPARATUS AND METHOD**

WIDERSTANDSREDUZIERUNGS- UND ENERGIEERZEUGUNGSVORRICHTUNG UND -VERFAHREN

APPAREIL ET PROCÉDÉ DE RÉDUCTION DE TRAÎNÉE ET DE GÉNÉRATION D'ÉNERGIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.10.2018 US 201816175396**

(43) Date of publication of application:
**08.09.2021 Bulletin 2021/36**

(73) Proprietor: **Shah, Naseem, Z.**
**Brampton, ON L6P 4C4 (CA)**

(72) Inventor: **Shah, Naseem, Z.**
**Brampton, ON L6P 4C4 (CA)**

(74) Representative: **Noble, Frederick**
**Albright IP Limited**
**County House**
**Bayshill Road**
**Cheltenham, Glos. GL50 3BA (GB)**

(56) References cited:
**US-A1- 2006 185 974     US-A1- 2010 090 497**
**US-B1- 10 011 344     US-B1- 6 337 436**
**US-B1- 6 517 148     US-B2- 8 308 112**
**US-B2- 8 523 115     US-B2- 8 641 127**
**US-B2- 8 641 127     US-B2- 8 959 993**
**US-B2- 9 067 674     US-B2- 9 067 674**

## Description

TECHNICAL FIELD

The present technology relates generally to a transport vehicle cover that reduces aerodynamic drag by utilizing a real time closed loop feedback control system for inhibiting flow separation based on Fiber Bragg grating (FBG) sensors and Dielectric-barrier-discharge (DBD) plasma actuators. The vehicle cover also generates electricity using solar energy to charge the onboard battery racks utilizing concealed solar arrays embedded with multi-junction photovoltaic cells to augment its primary source of energy.

BACKGROUND ART

The United States Energy Information Administration has released data showing that the transportation of people and goods accounts for about 25 percent of all energy consumption in the world and that passenger transportation, in particular light-duty vehicles, account for the most transportation energy consumption. The share of transport in world energy consumption is expected to increase to 30 percent by 2040.

Self-generation of energy by transport vehicles using solar energy will reduce transport's foot print in the consumption of world energy. Another major drain on energy utilization in transport vehicles is aerodynamic drag. Depending on the geometry of a vehicle, aerodynamic drag may account for as high as 60% of its energy consumption. Reduction in aerodynamic drag would significantly reduce the environmental footprint of transport vehicles and result in major cost and environmental benefits due to reduced fuel consumption.

Prior art arrangements have been provided for reducing drag for an object comprising a vehicle of a given shape. A few of such type of arrangements include creating a plasma between a surface on the object and an area of laminar flow above the object.

Historically, plasma actuators have had very limited success in flow control due to a number of factors. The structure for any given drag-reducing unit based on traditional plasma actuators does not allow for seamless integration in a number of vehicle geometries. None of the prior art uses sensors to judge flow separation in a transport vehicle in real time. Neither do these take into account the most fundamental contributing factors to aerodynamic drag including vehicle speed, atmospheric temperature, coefficient of drag, Reynolds number, relative humidity, surface area of the transport vehicle, air pressure, and its reduction based on any one or more of these parameters. For example, it was determined that the creation of plasma on the surface of transport vehicles at low speeds, e.g., less than 25 mph, increased drag for most transport vehicle geometries. However, almost all prior art supports the activation of plasma actuators as soon as the vehicle starts moving.

DBD plasma actuators have a high electrical energy consumption that overrides the saved power from the skin-friction drag reduction. However, if an efficient design of DBD plasma actuators is used, then substantial power saving is achievable. Prior art has not been able to specify that efficient design as yet.

Active flow control technologies have not yet been adopted in controlling aerodynamic drag essentially due to the disorderly nonlinear nature of the key physical processes and because of the difficulty in monitoring or estimating the chaotic flow status and parameters accurately, resulting in a very challenging optimal control problem. Many other factors regarding deployment of actuators for drag reduction have not been considered by the prior art.

The ability of traditional plasma actuators in flow control at highway speeds is practically non-existent. Successful demonstration of vehicular drag reduction using plasma actuators at highway speeds has as yet not been reported.

United States Patent No. 9,951,800 discloses a surface plasma actuator having a conducting wire attached to a surface of a target object and electrically insulated from the target object. Surface plasma is generated adjacent to the conducting wire by applying a pulse voltage to the conducting wire. This arrangement is particularly suited to the vanes in gas turbines. The wire structure is not suited for incorporation in transport vehicles.

United States Patent No. 9,821,862 discloses a system, for controlling aerodynamics of a vehicle comprising multiple pairs of opposing plasma actuators positioned at lateral positions on an underside of the vehicle, wherein each pair of opposing plasma actuators comprises two electrodes. The plasma actuator may be configured as a small strip, similar in thickness to a strip of aluminum foil, having or connected to a glue layer for easy attachment to a transport vehicle body, and then connected to a power source. The plasma actuator is not interacting with another body component integral with the shape of a vehicle.

United States Published Patent Application No. 20180065690 discloses a plasma actuator including a first electrode disposed on a substrate, covered by a dielectric layer, and a second electrode disposed on the dielectric layer. The plasma actuator creates a plasma region, altering air flowing over the actuator. A particular structure for reducing drag is not shown.

Prior art arrangements have also been provided for directing electric current generated by photovoltaic cells to the transport vehicle. Most of these are restricted to the roof or part of the roof of the vehicle while some other structures do not blend seamlessly into the shape of the vehicle and increase aerodynamic drag. Also, the photovoltaic cells in most of these structures are single cell with a maximum theoretical efficiency of about only 33%. The solar arrays in prior art are not concealed and do not blend-in with the rest of the surface of the vehicle and early adoption was inhibited because of aesthetic reasons.

United States Patent No. 6,517,148 B1 discloses a solar cover for a motor vehicle for the roof only with a transparent cover.

United States Patent No. 6,474,729 B2 discloses a solar cover for a motor vehicle for the roof only with a carrier plate with a plurality of photovoltaic cells and a cover plate.

United States Patent No. 6,337,436 B1 discloses a solar module for mounting on motor vehicles, which is provided with a top cover layer and a bottom cover layer, between which a solar generator is embedded which has plurality of electrically interconnected photovoltaic cells.

United States Patent No. 5,545,261 discloses solar roof for motor vehicles with a solar generator having photovoltaic cells for supplying power to a power consumer and/or a battery and with a DC converter for impedance matching between the solar generator and the consumer and/or battery.

United States Patent No. 5,154,481 discloses a vehicle roof with at least one cover that, alternatively, closes or at least partially opens an opening in a fixed roof surface of the vehicle, carries a solar power source for supplying power to at least one power consuming device.

United States Patent No. 6, 155,636 discloses a solar roof for motor vehicles having a cover with photovoltaic cells which are located between an outside cover plate and inside covering, at least one power consumer which is separate from the solar cover.

United States Patent No. 8,641,127 B2 discloses a plasma spoiler mounted in a rear portion of a vehicle for exerting a force on a passing air flow. A controller in communication with a speed sensor is provided to control a switch to activate the plasma spoiler only when the vehicle exceeds a trigger speed.

SUMMARY

An apparatus for reducing drag in a transport vehicle is set out in independent claim 1. Preferred/optional features are set out in dependent claims 2 to 11.

A method for reducing drag and increasing energy efficiency of a transport vehicle is set out in independent claim 12. Preferred/optional features are set out in dependent claims 13 to 15.

The apparatus and method are provided in a transport vehicle cover which reduces energy consumption through significant reduction in aerodynamic drag. The vehicle cover also generates solar energy to augment other sources of energy as fuel for the vehicle. The vehicle cover has the shape that conforms to the exterior surface sections of the vehicle. It either completely replaces the respective part or mates with and overlaps it thereby retaining the original form, shape, and contour of the vehicle. For aesthetic reasons, the vehicle cover conceals every element embedded in it so that it does not stand out from the rest of the vehicle. More than one drag-reducing panel may be integrated into various sections of a transport vehicle body. Single or combinations of drag-reducing panels may be activated to provide various drag reduction results.

Fiber Bragg grating (FBG) sensors, surface dielectric barrier discharge (DBD) plasma actuators, and solar arrays based on multi-junction photo-voltaic cells, are embedded in the vehicle cover at pre-determined locations based on the geometry of the transport vehicle. The operation of the drag-reducing panel is based on an adaptive, predictive, real time closed loop feedback control system. Data from the fiber Bragg grating (FBG) sensors is used to judge flow separation in real time. This information is used to activate the DBD plasma actuators to induce tangential jets to delay flow separation, thereby reducing pressure drag. The plasma actuator is activated at an unsteady actuator frequency that is determined based on the speed of the transport vehicle and the distance of the actuator electrode from the trailing edge of the vehicle. Output from the fiber Bragg grating (FBG) sensors is used in the selection of a DBD plasma actuator or a group of DBD actuators that are to be activated for optimizing drag reduction.

Another group of DBD actuators is embedded in the vehicle cover and is configured to generate spanwise travelling waves to reduce skin-friction drag whenever the vehicle speed exceeds a pre-determined threshold.

The embedded solar arrays in the vehicle cover charges the vehicle whenever these are exposed to natural sunlight or incandescent light. The solar arrays, the DBD plasma actuators and the fiber Bragg grating (FBG) sensors do not share the same space on the vehicle cover.

It has been determined that activation of DBD plasma actuators at speeds less than 25 mph increases drag for most transport vehicle geometries. The system is, thus, preferably programmed to function only when the vehicle speed exceeds a predetermined threshold.

It is noted, the use of the DBD plasma actuators is not essential with respect to reducing drag under all conditions.

BRIEF DESCRIPTION OF THE DRAWINGS

> Figure 1 is a diagram illustrating an example of the phenomenon of aerodynamic drag;
> Figure 2 is an exploded view of an exemplary transport vehicle illustrating vehicle cover components;
> Figure 3 is a schematic diagram of a string-type surface dielectric barrier discharge (DBD) plasma actuator;
> Figure 4 is an isometric view of a multi-junction photovoltaic cell showing successive layers partially pulled back;

Figure 5 is a is a plan view of a multi-junction photovoltaic cell, the placement of the cell in a module with multiple multi-junction photovoltaic cells, and the placement of the module in a solar array;

Figure 6 is a diagram illustrating an exploded view of layers of a vehicle cover having the solar array embedded in it;

Figure 7 is a schematic diagram of the electronic circuit including connectivity between elements of a solar energy generation system;

Figure 8 is a diagram illustrating a symmetrical airfoil installed at a trailing edge of the transport vehicle;

Figure 9 is a diagram illustrating a cross section of the symmetrical airfoil installed at the trailing edge of the transport vehicle;

Figure 10 is a flow chart for the closed loop control of flow separation in response to transport vehicle speed; and

Figure 11 is a diagram illustrating an exemplary transport vehicle in which arrays of plasma actuators are operated in accordance with the flow chart of Figure 10.

## DESCRIPTION OF EMBODIMENTS

The world is currently not on track to meet the main energy-related components of the Sustainable Development Goals (SDGs), agreed by 193 countries in 2015. The International Energy Agency's (IEA) Sustainable Development Scenario (SDS) outlines a major transformation of the global energy system, showing how the world can change course to deliver on the three main energy-related SDGs simultaneously.

These include a growing electrification of energy systems fueled by rapidly decreasing costs, deployment of clean energy technologies, and the halving of energy-related CO2 emissions by 2040.

Transport vehicles which reduce energy consumption through drag reduction and generate solar energy to augment other sources of energy for fuel at the same time hold the key in the achievement of IEA's Sustainable Development Goals (SDGs).

A general description of the phenomenon of drag is presented first. Drag refers to forces that oppose the relative motion of an object through a fluid, for example air.

Drag depends on the transport vehicle speed, air density, size, shape, and geometry of the body, and its surface area. One way to deal with such complex interrelated dependencies is by distinguishing the dependence by a single variable called the drag coefficient, represented as "Cd." This allows expression of all the factors into a single equation.

$$(1) \; D = Cd * A * .5 * r * V^2$$

where:

D = Drag
Cd = Drag coefficient
r = Air Density
V = Velocity
A = Surface Area

Drag coefficient is mostly determined experimentally using a wind tunnel. The average modern transport vehicle achieves a drag coefficient of between 0.25 and 0.3. For a given shape, drag coefficient is substantially fixed. Air density is a function of air pressure, temperature, and relative humidity. Reynolds number is a dimensionless quantity that can help predict flow patterns in different fluid flow situations. At low Reynolds numbers, flows tend to be dominated by laminar sheet-like flow, while at high Reynolds numbers turbulence results from differences in the fluid's speed and direction, which may move against the overall direction of the flow. These are called eddy currents and use up energy in the process.

A key component of the present subject matter is the string-type surface DBD plasma actuator. It can be used very effectively in manipulating the air flow over any surface. The string-type DBD plasma actuator is used in the present embodiments and can be designed to follow the shape of any thermodynamic body. It is mounted in a recess in the surface of the vehicle cover to which it is applied; essentially flush to the surface. It uses very low energy and generates nonthermal plasma which may be used over temperature sensitive surfaces to enable significant boundary layer modifications. Boundary layer modifications can effectively prevent flow separation reducing aerodynamic drag. It can also reduce skin-friction drag by oscillating the flow in a span-wise direction. DBD plasma actuators exhibit low weight, non-moving parts, and when switched off have a non-existent aerodynamic signature. DBD actuators may be positioned over aerodynamic surfaces in span-wise and stream-wise directions. In the former, the induced body force is in the same direction as the incoming flow. Span-wise oscillation is one of the most effective techniques in wall turbulence control, with as much as 45% reduction in skin-friction drag. In the latter, induced thrust is perpendicular to the free stream direction. In this case, the composition of these two flows produces vorticities propagating in the downstream direction.

The plasma actuators in the specific embodiments within this application preferably use ±24 volts DC. 12 volts DC which is available in most transport vehicles is converted to ±24 volts DC by using a standard DC 12V to DC 24V step-up converter. From a health and safety perspective, voltage is applied to an encapsulated electrode and the exposed electrode is grounded. Additional insulation is inserted to enable use of the actuators on metallic structures. Another key component of the present embodiment is the fiber Bragg grating (FBG) sensor. FBG sensors are preferred for this application due to their miniature size, high sensitivity, higher accuracy, longer stability, corrosion resistance, wide operational range, multiplexing capabilities, immunity to electrical and magnetic fields, and the ability to measure ultra-highspeed events. It is a type of distributed Bragg reflector constructed in a short segment of optical fiber that reflects particular wavelengths of light and transmits all others. This is achieved by creating a periodic variation in the refractive index of the fiber core, which generates a wavelength-specific dielectric mirror. It reflects a wavelength of light that shifts in response to variations in temperature and/or strain.

In the present example the FBG sensor is attached to the interior surface near the base of a cantilever beam on the pressure surface of a symmetrical airfoil installed at a trailing edge of the transport vehicle to judge flow separation in real time. When a cantilever tip is vibrated by the flow near the trailing edge of the symmetrical airfoil, the strain at a cantilever base is reflected in the form of Bragg wavelengths detected by the FBG sensor. The sensor calculates flow separation in real time by calculating running standard deviations in the Bragg wavelength detected by it.

Two of the design objectives of the present subject matter are:

1. to enable transport vehicles to significantly reduce energy consumption through the reduction of aerodynamic and friction drag; and
2. to enable transport vehicles to generate solar energy to augment other sources of energy.

In one embodiment an apparatus and a method are provided. The present embodiment comprises a transport vehicle cover that reduces aerodynamic drag by utilizing an adaptive, predictive, real time closed loop feedback control system for inhibiting flow separation based on fiber Bragg grating (FBG) sensors and dielectric barrier discharge (DBD) plasma actuators. The vehicle cover also generates electricity using solar energy to charge the onboard battery racks utilizing concealed solar arrays embedded with multi-junction photovoltaic cells to augment its primary source of energy. The vehicle cover has a shape that conforms to the exterior surface sections of the transport vehicle, so that it either completely replaces the respective part or mates with and overlaps it, thereby retaining the original form, shape, and contour of the vehicle.

More than one drag-reducing panel may be integrated into various sections of a transport vehicle body. Single or combinations of drag-reducing panels may be activated to provide various drag reduction results.

Fiber Bragg grating (FBG) sensors were selected for the current embodiments for judging flow separation in real time. The rationale for the selection of the FBG sensors for the present embodiments was that these are completely immune against electromagnetic interference and run without electric power at the measurement site. The FBG sensors exhibit high corrosion and humidity resistance, show good long-term signal stability, have the fastest response times, and are very sensitive to strain.

Fiber Bragg grating (FBG) sensor is a microstructure that is photo-inscribed in the core of a single-mode optical fiber (SMF). This is done by crosswise illumination of the fiber with a UV laser beam and using a phase mask to generate an interference pattern in its core. This brings about a permanent change in physical characteristics of a silica matrix. This change comprises a spatial periodic modulation of the core index of refraction that creates a resonant structure.

An FBG has unique characteristics to perform as a strain sensor. For example, when the fiber is stretched or compressed, the FBG will measure strain. This happens because the deformation of the optical fiber leads to a change in the period of the microstructure and of the Bragg wavelength.

Fiber Bragg grating (FBG) sensors, surface dielectric barrier discharge (DBD) plasma actuators and solar arrays based on multi-junction photovoltaic cells, are embedded in the vehicle cover at pre-determined locations based on the geometry of the transport vehicle. The operation of the drag-reducing panel is based on a real time closed loop feedback control system. Data from the fiber Bragg grating (FBG) sensors embedded in the symmetrical airfoil installed at the trailing edge of the transport vehicle is used to sense flow separation in real time. This information is used to activate the DBD plasma actuators to induce tangential jets to delay flow separation, thereby reducing drag. Output from the fiber Bragg grating (FBG) sensors is used in the selection of a DBD plasma actuator or a group of DBD actuators that are to be activated for optimizing drag reduction.

The embedded, concealed solar arrays in the vehicle cover charge the vehicle when exposed to natural sunlight or incandescent light. The solar arrays, the DBD plasma actuators, and the fiber Bragg grating (FBG) sensors do not share the same space on the vehicle cover.

It has been determined in accordance with the current subject matter that activation of DBD plasma actuators at speeds less than 25 mph increases drag for most transport vehicle geometries. The system may be programmed to function only when the vehicle speed exceeds a predetermined threshold, for example 25 mph.

The present subject matter is described in sufficient detail below with reference to the diagrams so that any person of ordinary skill in the pertinent art could make and use the invention without extensive experimentation. The best mode contemplated of carrying out the invention has also been set forth. Each element in the drawings has been mentioned in the description below.

Aerodynamic drag refers to forces that oppose relative motion of an object through a fluid, for example air. Drag depends on air density; velocity of the object, air's compressibility and viscosity, size, shape, and geometry of the object and roughness of the object's surface.

For transport vehicles aerodynamic drag has two major components, pressure drag and skin friction drag.

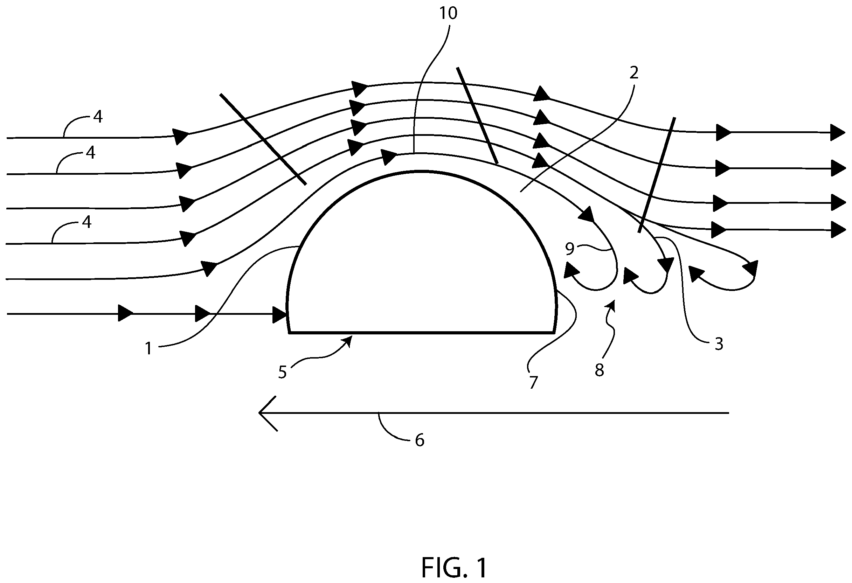

Figure 1 is a diagram illustrating an example of the phenomenon of aerodynamic drag. Pressure drag is caused by the air particles being more compressed on the front-facing surface 1 of a moving object 5, moving in a "forward" direction 6. Laminar air flow layers 4 pass over the moving object 5. The laminar airflow layers 4 collectively comprise fluid flow. An air flow layer 4 adjacent to an upper surface of the moving object 5 is a boundary layer 10. The layers 4 are more widely spaced behind a back surface 7 of the moving object 5. Flow separation layer 2 which is behind the back surface 7 creates a low-pressure area 3 in a wake 8 with eddy currents 9 having a high kinetic energy. This low-pressure area 3 and the eddy currents 9 create a suction effect that tends to pull the moving object 5 backwards. The force produced by the suction effect is called pressure drag and is a key component of aerodynamic drag. If formation of the flow separation layer 2 is inhibited by any means it reduces the area of low pressure in the wake 8 and inhibits the creation of pressure drag. Skin friction drag is caused by the friction of a fluid against a surface of an object that is moving through it. It is directly proportional to an area of the surface in contact with the fluid and increases with the square of the velocity. The present subject matter inhibits formation of the separation layer at highway speeds and disables the actuator when the actuator could increase drag at slow speeds below a particular threshold level.

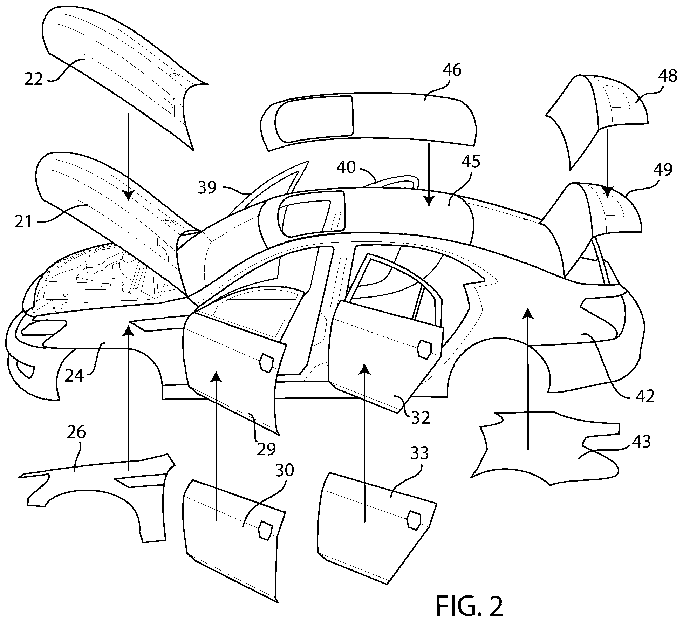

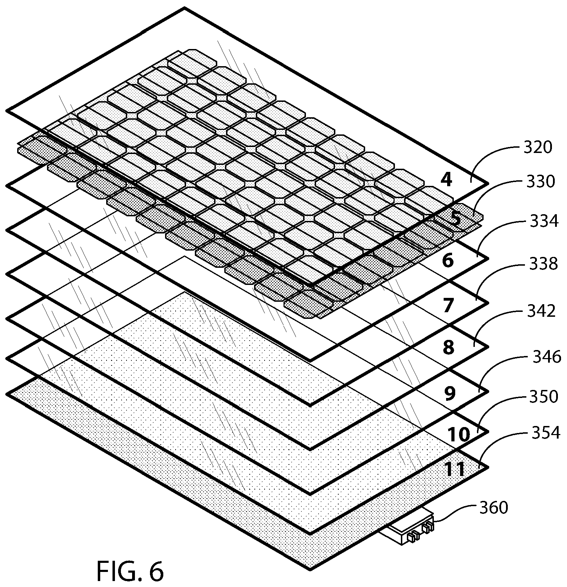

Figure 2 is an exploded view of an exemplary transport vehicle 18 illustrating vehicle cover components. Aerodynamic drag is reduced by placement of drag-reducing solar arrays 300 (Figure 6) in body components. An exemplary set of drag reducing solar panels is articulated below. The drag reducing solar panel conceals the solar array 300 embedded in it through a reinforced colored glass top, the photovoltaic cell array of matching color, and a light absorbing back sheet of matching color. The drag reducing solar panel may either completely replace the respective original exterior surfaces 16 of the vehicle or the respective body component is formed with a recess to receive a drag-reducing solar panel. One or more drag-reducing solar panels will comprise a plasma actuator array located adjacent a position at which an undesired separation layer may be formed.

For example, a hood 21 receives a panel 22. A driver's side front quarter panel 24 receives a panel 26. Driver's side front and rear doors 29 and 32 receive panels 30 and 33 respectively. Passenger side front and rear doors 39 and 40 have corresponding recesses to those on the driver's side doors. Therefore, the panels 30 and 33 are illustrative of the panels in the doors 39 and 40. Similarly, a driver side rear quarter panel 42 receives a panel 43. The panel 43 is also illustrative of a panel received in a passenger side rear quarter panel. The roof 45 receives a panel 46. Panel 48 is received in a trunk lid 49. A front passenger side quarter panel has a recess which receives a panel represented by the panel 26.

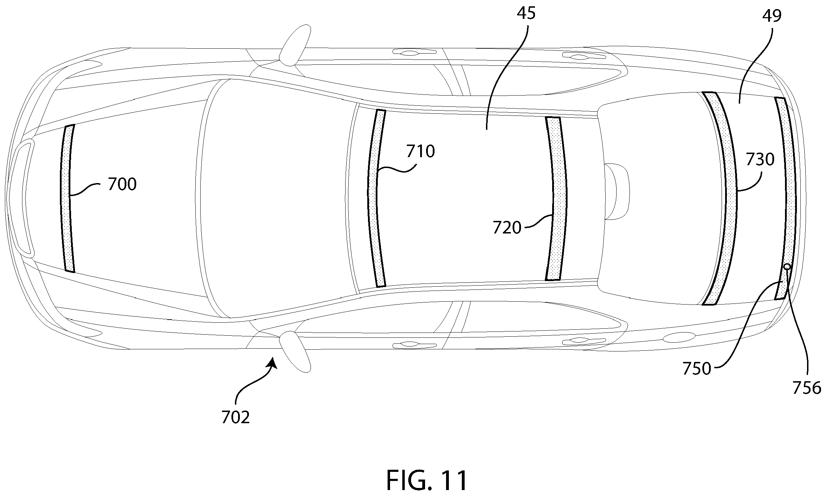

As further described with respect to Figure 11, Fiber Bragg grating (FBG) sensors, surface dielectric barrier discharge (DBD) plasma actuators, and solar arrays based on multi-junction photovoltaic cells, are embedded in the vehicle cover at predetermined locations based on the geometry of the transport vehicle. The operation of the drag-reducing panel is based on an adaptive, predictive, real time closed loop feedback control system. Data from the fiber Bragg grating (FBG) sensors is used to judge flow separation in real time. This information is used to activate the DBD plasma actuators to induce tangential jets to delay flow separation, thereby reducing pressure drag. The plasma actuator is activated at an unsteady actuator frequency that is determined based on the speed of the transport vehicle and the distance of the actuator electrode from the trailing edge of the vehicle. Output from the fiber Bragg grating (FBG) sensors is used in the selection of a DBD plasma actuator or a group of DBD actuators that are to be activated for optimizing drag reduction.

Another group of DBD actuators are embedded in the vehicle cover and are configured to generate spanwise travelling waves to reduce skin-friction drag whenever the vehicle speed exceeds a predetermined threshold.

The embedded solar arrays in the vehicle cover charges the vehicle whenever these are exposed to natural sunlight or incandescent light. The solar arrays, the DBD plasma actuators, and the fiber Bragg grating (FBG) sensors do not share the same space on the vehicle cover.

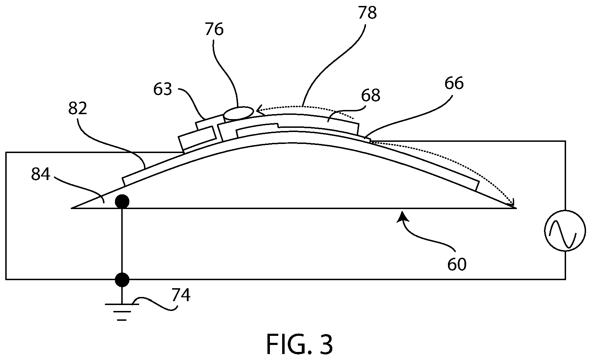

Figure 3 is a schematic diagram of a string-type surface dielectric barrier discharge (DBD) plasma actuator 60. It is mounted in a recess in a surface of one of the vehicle cover components illustrated in Figure 2, essentially flush to the surface. Each actuator 60 can be effectively used in the manipulation of a boundary layer, e.g., boundary layer 10 of Figure 1. A boundary layer is a thin layer located close to a wall of an object traveling through a fluid. Successful control of this region allows for significant drag reduction.

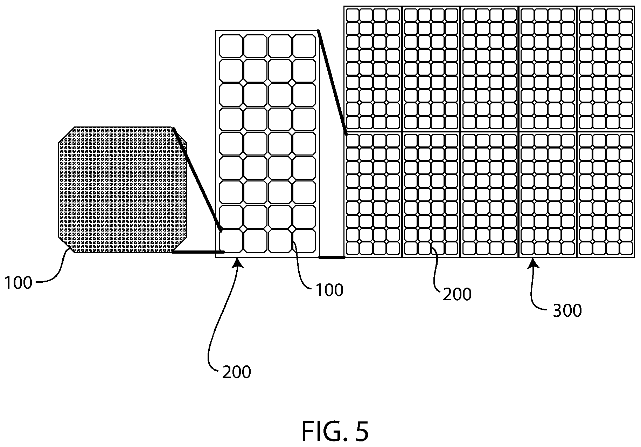

The string-type DBD plasma actuators 60 embedded in the drag reducing solar panel of the present embodiment (Figure 5) comprise two electrodes 63 and 66 offset in the chordwise direction and separated by a dielectric layer 68 . The encapsulated electrode 63 is connected to a level of reference potential, namely ground 74. The exposed electrode 66 is attached to a voltage supply. The plasma actuators 60 in the present embodiment use $\pm 24$ volts DC. When activated, plasma originates at the exposed electrode 66 and spreads out across a dielectric surface 76 that is above the encapsulated electrode 63. This arrangement induces a tangential jet 78 with a strong horizontal velocity component that flows away from the exposed electrode 66 across the encapsulated electrode 63, without the support of any moving parts.

The system sits atop an insulation layer 82 with a metallic blade 84 at the bottom. The DBD actuator 60 is able to follow the curvature of the surface it is applied to, is lightweight, can be switched on or off by an electronic control unit (ECU), is all-electric, can be activated at a wide range of modulation frequencies, and has a high frequency response. In order to save energy the actuator 60 in the current embodiment is operated in unsteady mode. The actuator 60 is switched on and off at a particular modulation frequency. The energy consumption in unsteady mode operation is less than 12 watts per meter. The frequency can range from 5 kHz to 75kHz. The voltage can range from 5 $kV_{pp}$ to 18 $kV_{pp}$.

The string-type DBD plasma actuator 60 used for the control of pressure drag in the current embodiment is activated at an unsteady actuator frequency that is equal to the vehicle speed in meters per second divided by the distance in meters of the plasma actuator 60 electrode from the trailing edge of the transport vehicle.

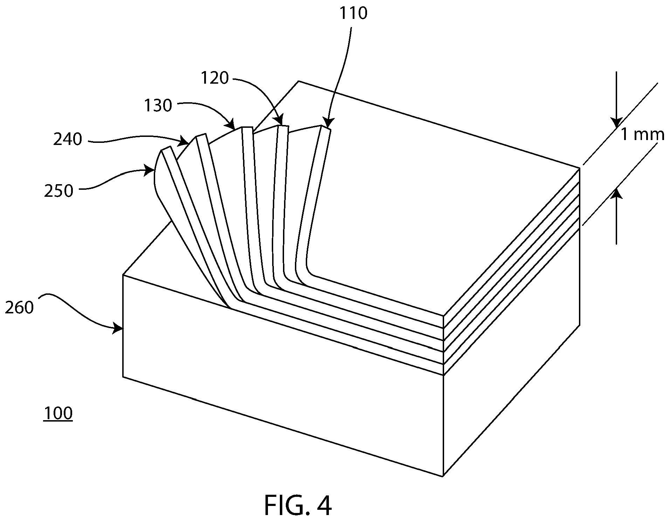

Figure 4 is an isometric view of a multi-junction photovoltaic cell 100 showing successive layers partially pulled back. Each multi-junction cell 100 is made-up of multiple layers, each layer capturing a portion of the sunlight reaching the cell. This allows the cell to absorb light from a wide range of the solar spectrum, leading to better efficiency. A multi-junction photovoltaic cell is a stack of individual single-junction cells in descending order of bandgap. The top cell layer 110 captures light with the shortest wavelengths having the highest energies and passes the rest of the photons on to be absorbed by lower-bandgap cells 120 and 130. Multi-junction cells are arranged in a series configuration to form a module 200 (Figure 5) and modules 200 are then connected in parallel-series configurations to form arrays 300 (Figure 5). A layer 240 is an n type silicon layer. Layer 250 is a p type silicon layer. The layer 240 and the layer 250 provide a p-n junction. A backing layer 260 insulates the cell 100.

Figure 5 is a is a plan view of a multi-junction photovoltaic cell 100, the placement of the cell 100 in a module 200 with multiple multi-junction photovoltaic cells, and the placement of the module 200 in a solar array 300.

Figure 6 is a diagram illustrating an exploded view of layers of a vehicle cover having the solar array 300 embedded in it. The vehicle cover conceals the elements of the solar panel embedded in it through a colored reinforced glass top 320. The photovoltaic layer 330 comprises a plurality of multi-junction photovoltaic cells 100 (Figure 4). Layer 334 is an encapsulant. Layer 338 is a substrate. Layer 342 is a cover film. Layer 346 is the seal. Layer 350 is the gasket. Layer 354 is the back sheet. Connection to the power system is provided by a DC connector 360. The reinforced glass top sheet 320, the photovoltaic layer comprising plurality of multi-junction photovoltaic cells 330, and the back sheet 354 all have the same color as that of the vehicle to ensure that the solar energy generation components within the vehicle cover remain concealed and do not stand out from the rest of the vehicle.

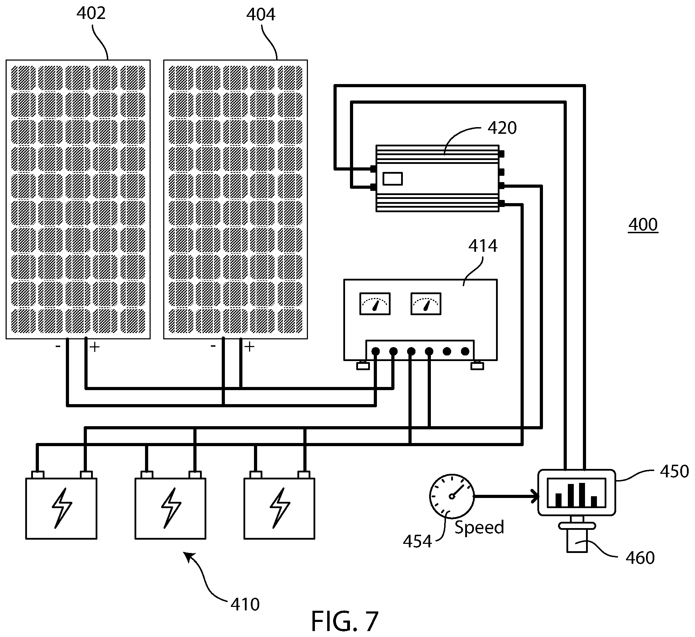

Figure 7 is a schematic diagram of the electronic circuit 400 including connectivity between elements of a solar energy generation system. First and second solar arrays 402 and 404 generate DC electricity which is routed to an on-board battery rack 410 through the DC combiner box 414. A standard DC 12V to DC 24V step-up converter 420 is used to convert 12 V DC to ±24 V DC which is routed to a drag-reducing closed loop system 460 through an electronic control module (ECM) 450. The drag-reducing closed loop system 460 is actuated as soon as it receives input from a speed sensor 454 indicating that the vehicle's ground speed has exceeded a predetermined threshold below which drag will be increased, for example 25 mph. The speed sensor 454 includes but is not limited to a speedometer, pitot static tubes, anemometry, or laser doppler. These sensors give an electronic signal that can be read by the electronic control module (ECM) 450.

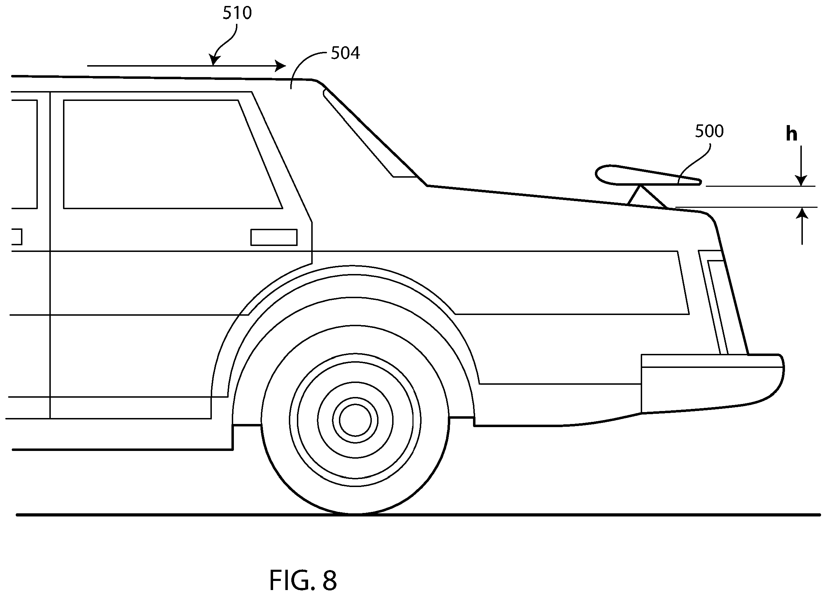

Figure 8 is a diagram illustrating a symmetrical airfoil 500 installed at a trailing edge of a transport vehicle 504 and used for inhibiting formation of a separation layer. A vertical distance h of the symmetrical airfoil 500 from the surface of the vehicle 504 is less than the thickness of a laminar boundary layer 510 for the respective vehicle geometry calculated using the Blasius solution for laminar boundary layers over a flat plate. The distance h of the symmetrical airfoil 500 from the surface is less than the thickness of the boundary layer 510 calculated for the respective vehicle geometry and may vary between 0.5 inches to 2 inches for most vehicle geometries. The objective is to keep the symmetrical airfoil 500 just within the boundary layer 510 for laminar flow.

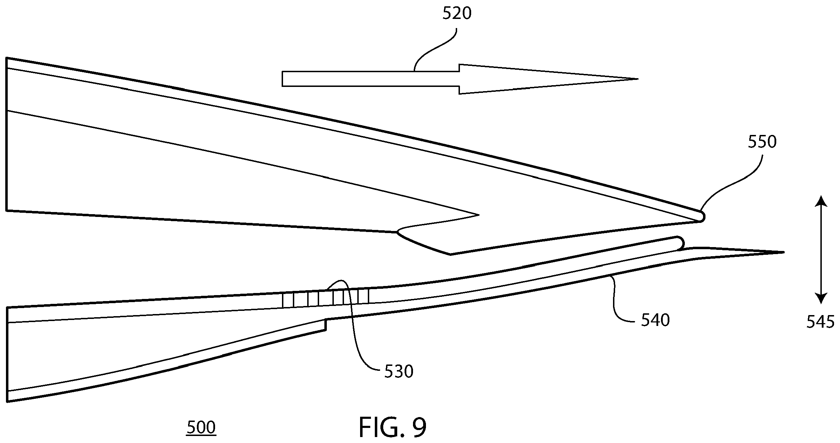

Figure 9 is a diagram illustrating a cross section of the symmetrical airfoil 500 installed at the trailing edge of the transport vehicle 504. The arrow 520 represents the direction of air flow when the vehicle 504 is moving forward. An FBG strain measurement system comprising an FBG sensor 530, which can precisely detect minute elastic deformation of an optical fiber, is attached to the interior surface near the base of a cantilever beam 534 modeled on a pressure surface of the symmetrical airfoil 500. In order to realize a fiber Bragg strain sensor, strain from the substrate needs to be fully transferred to the fiber Bragg grating. Therefore, the sensor 530 is tightly bonded onto the surface and the substrate strain is completely guided to the fiber. The strain at the cantilever root is reflected in the form of Bragg wavelengths detected by the FBG sensor 530 when the cantilever tip 540 is vibrated by the flow 545 near the trailing edge 550 of the symmetrical airfoil 500.

The range of values for the strain reflected in the FBG sensor 530 when the symmetrical airfoil 500 is moving within the laminar boundary layer 510 is derived from the respective vehicle geometry in a wind tunnel simulation. Similarly, when a vehicle is in motion, flow separation is confirmed when the cantilever tip 540 stops vibrating by the flow 545 near the trailing edge 550 of the symmetrical airfoil 500. This range of values of the FBG sensor 530 is also determined in a wind tunnel and noted for the respective vehicle geometry

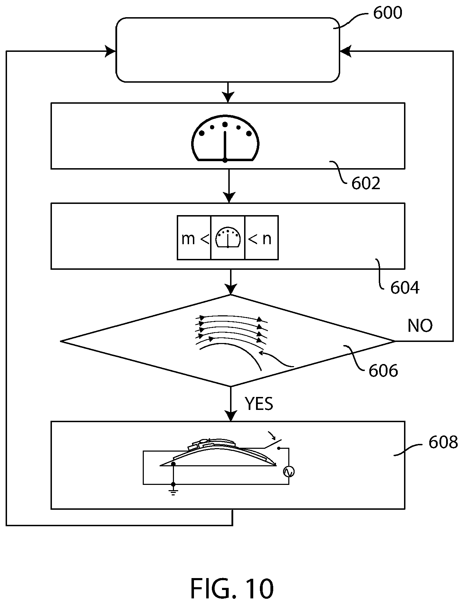

These values are used in the real time closed loop feedback control system 460 (Figure 7) to determine when flow separation occurs and when it is mitigated by the induction of tangential flow by the DBD plasma actuators as illustrated in the flowchart in Figure 10.

Figure 10 is a flow chart for the closed loop control of flow separation in response to transport vehicle speed. This operation inhibits actuation of plasma actuator arrays until a vehicle reaches a speed at which drag will be reduced. An on-board electronic control module (ECM) 450 (Figure 7) controls the working of the closed loop feed control system 460 and executes activities and makes decisions as shown in Figure 10.

Operation begins at block 600. At block 602 the output of the FBG sensor 530 (Figure 9) is measured to determine strain. An FBG strain measurement comprises precisely detecting minute elastic deformation of an optical fiber attached to the interior surface near the base of the cantilever beam 540 (Figure 9) modeled on the pressure surface of the symmetrical airfoil 500 installed at the trailing edge of the transport vehicle 510.

At block 604 the strain measurement is compared to determine if the strain value falls within a preselected range of values. Being within the preselected range of values indicates that the cantilever tip 540 substantially stops vibrating in response to the air flow 545. This condition indicates flow separation from the symmetrical airfoil 500, confirming flow separation. At block 606 the determination is made whether flow separation has occurred. If so, operation proceeds to block 608. If not, operation returns to block 600. At block 608 activation of the embedded string-type DBD plasma actuators is initiated to induce tangential plasma jets to inhibit flow separation, thereby reducing pressure drag. Operation cycles in order to continuously monitor presence or absence of the separation layer. The operation comprises an adaptive, predictive, real time closed loop method for controlling aerodynamic drag.

Figure 11 is a diagram illustrating an exemplary transport vehicle in which arrays of plasma actuators are operated in accordance with the flow chart of Figure 10. An array 700 is an array of string-type DBD plasma actuators 60 (Figure 3) embedded in the frontside of the hood 21 (Figure 2) of the vehicle. Since flow separation is not required to be mitigated on the hood of the car these are designed to generate span-wise travelling waves to reduce skin friction drag.

In a transport vehicle 702, an array 710 of string-type DBD plasma actuators 60 (Figure 3) is embedded in the frontside of the roof 45 of the vehicle. Since flow separation is not required to be mitigated in the frontside of the roof 45 of the vehicle, these are configured to generate span-wise travelling waves to reduce skin friction drag.

It is noted that arrays 700 and 710 are activated when speed of the vehicle exceeds a predetermined threshold, for example 25 mph, and deactivated when the speed drops below that threshold. These are not part of the adaptive, predictive, real time closed loop feedback control system 460 of the present embodiment.

Array 720 and array 730 are each an array of string-type DBD plasma actuators 60 embedded in rear end of the roof 45 and front end of the trunk lid 49 of the vehicle, respectively. These two arrays induce tangential plasma jets to inhibit flow separation. These are part of the adaptive, predictive, real time closed loop feedback control system 460 for drag reduction and operate in accordance with Figure 10. These arrays are activated when the vehicle speed exceeds a predetermined threshold, for example 25 mph. This speed is indicated when the FBG sensor 530 embedded in the symmetrical airfoil 500 and installed at the trailing edge of the vehicle determines that flow separation has occurred.

Airfoil 750 is a symmetrical airfoil installed at a trailing edge of the transport vehicle 702 with the FBG sensor 756 embedded in it. These arrays are activated at a frequency equal to the speed of the vehicle in meters per second divided by the distance from the actuator 60 electrode to the trailing edge of the vehicle in meters. The onboard electronic control module (ECM) 450 (Figure 7) controls the working of the closed loop feed control system 460 and executes activities and makes decisions in compliance with Figure 10.

All the remaining surface of the vehicle excluding the front windshield, rear windshield, and windows are embedded with concealed solar arrays.

The present embodiment will enable cars, trucks, and trains to generate their own power through solar energy. The product will also enable these vehicles to reduce aerodynamic drag thereby increasing their range and lowering their fuel consumption by as much as 40%. A formula determines the optimum frequency of the actuators based on their distance from the trailing edge of the vehicle as well as the speed of the vehicle to maximize drag reduction.

In the foregoing detailed description, the apparatus of the present invention has been described with reference to specific exemplary embodiments thereof. It will, however, be evident that various modifications and changes may be made thereto without departing from the broader scope of the present invention, which is defined solely by the appended claims.

The present specification and figures are accordingly to be regarded as illustrative rather than restrictive. The description and abstract are not intended to be exhaustive or to limit the present invention to the precise forms disclosed.

**Claims**

1. Apparatus for reducing drag in a transport vehicle (18) having an exterior surface (16) and comprising a first dielectric discharge barrier plasma actuator (60) for providing a plasma jet (78), at least one solar array (300), an electronic control module (450) and a sensor (454) for actuating said dielectric discharge barrier plasma actuator (60) wherein said apparatus further comprises a cover component (20) formed to be integral with said exterior surface (16) and disposed in registration with an area of said exterior surface (16) and wherein said solar array (300) is included in said cover component (20); said dielectric discharge barrier plasma actuator (60) being positioned to provide a plasma jet (78) over the exterior surface (16) of said transport vehicle (18) when actuated; and wherein the electronic control module (450) and the sensor (454) are coupled for actuating said dielectric discharge barrier plasma actuator (60) at an unsteady actuator frequency determined based on the speed of a transport vehicle (18) and the distance of the said dielectric discharge barrier plasma actuator electrode from the trailing edge of the transport vehicle (18) in response to a preselected set of conditions including the transport vehicle speed exceeding a predetermined threshold below which drag will increase.

2. Apparatus for reducing drag according to claim 1 **characterized in that** said cover component (20) comprises a discrete panel that mates with a corresponding portion of the exterior surface (16) of said transport vehicle (18).

3. Apparatus for reducing drag according to claim 1 **characterized in that** said cover component (20) is unitary with the exterior surface (16) of the transport vehicle (18).

4. Apparatus for reducing drag according to claim 1 **characterized in that** a plurality of plasma actuators (60) are arranged in a plasma actuator array (700) comprising a plurality of dielectric discharge barrier plasma actuators (60).

5. Apparatus for reducing drag according to claim 4 **characterized in that** said plasma actuator array (700) is positioned to direct tangential plasma jets (78) to inhibit flow separation from said cover component (20).

6. Apparatus for reducing drag according to claim 5 **characterized in that** said plasma actuators (60) each comprises a string-type dielectric barrier discharge actuator and **characterized in that** the plasma actuator array (700) extends across a dimension of said cover component (20) disposed to be in a direction substantially normal to fluid flow (4) resulting from forward motion of said transport vehicle (18).

7. Apparatus for reducing drag according to claim 6 **characterized in that** a flow sensor (530) is positioned to respond to conditions for boundary layer separation at a trailing edge of said transport vehicle (18).

8. Apparatus for reducing drag according to claim 7 **characterized in that** said cover component (20) corresponds to a trunk cover (49) of said transport vehicle (18) and wherein said flow sensor (530) comprises a sensor (530) responding to fluid flow (4) at a reference position of a trailing surface at a trailing edge (550) of the transport vehicle (18) at a sensor height, the sensor height being less than a height of a boundary layer for laminar flow for the trailing surface.

9. Apparatus for reducing drag according to claim 8 **characterized in that** the flow sensor (530) comprises a symmetrical airfoil (500) at the reference position and positioned at the sensor height and a fiber Bragg grating sensor in said flow sensor (530) attached to an interior surface of a cantilever beam (534), the cantilever beam (534) having a tip (540) mounted to respond to flow at a trailing edge (550) of said symmetrical airfoil (500) such that flexing of said cantilever beam (534) substantially ceases in response to flow separation at the trailing surface.

10. Apparatus for reducing drag according to claim 9 **characterized in that** said electronic control module (450) activates said plasma actuator array (700) at a frequency equal to the speed of a transport vehicle (18) divided by a distance measured from the plasma actuator array (700) to the trailing edge of the transport vehicle (18).

11. Apparatus for reducing drag according to any preceding claim **characterized in that** the or each solar array (300) generates DC electricity which is routed to an on-board battery rack (410) through a DC combiner box (414); a step-up converter (420) is connected to the on-board battery rack and the electronic control module (450), the step-up converter configured to convert 12V to 24V and supply the electronic control module, the electronic control module being connected to and configured to control the first dielectric discharge barrier plasma actuator (60) through a closed loop system.

12. A method for reducing drag and increasing energy efficiency of a transport vehicle (18) comprising providing a cover component (20) at a section of an exterior surface (16) of the transport vehicle (18), at which section (20) flow separation inhibition must be provided in order to reduce aerodynamic drag, and providing a solar array (300) in the cover component (20), and providing a transport vehicle (18) electrical circuit (400) wherein the steps are performed of monitoring fluid flow (4) at a location at which a wake would be indicative of aerodynamic drag, wherein the steps are employed of placing a fiber Bragg grating (530) at the location; monitoring an output of the fiber Bragg grating (53) and comparing the output to a range indicative of formation of the separation layer (2); and

actuating a plasma actuator array (700) in response to indication of formation of the separation layer (2),

and wherein the electronic circuit responds to vehicle (18) velocity and activates said plasma actuator array (700) at an unsteady frequency equal to the speed of the transport vehicle (18) divided by a distance measured from the plasma actuator array (700) to a trailing edge of the cover component (20).

13. The method for reducing drag and increasing energy efficiency according to claim 12 **characterized in that** first and second categories of cover components (20) are recognized, a first category comprising cover components (20) at locations at which flow separation is not required to be mitigated, and a second category in which flow separation is required to mitigate pressure drag, and activating a plasma actuator array (700) to generate span-wise traveling waves in said first category of cover components (20).

14. The method according to claim 13 further comprising providing string-type dielectric barrier discharge plasma actuators (60) in said plasma actuator array (700).

15. The method according to claim 13 further comprising disabling said plasma actuator array (700) in response to velocity of the transport vehicle (18) being below the preselected threshold.

**Patentansprüche**

1. Vorrichtung zum Reduzieren des Luftwiderstands in einem Transportfahrzeug (18) mit einer Außenfläche (16) und umfassend einen ersten Dielektrische-Barriereentladung-Plasmaaktuator (60) zum Bereitstellen eines Plasmastrahls (78), mindestens eine Solaranordnung (300), einem elektronischen Steuermodul (450) und eine Sensor (454) zum Betätigen des Dielektrische-Barriereentladung-Plasmaaktuators (60), wobei die Vorrichtung ferner eine Abdeckungskomponente (20) umfasst, die integral mit der Außenfläche (16) ausgebildet ist und in Registrierung mit einem Bereich der Außenfläche (16) angeordnet ist und wobei die Solaranordnung (300) in der Abdeckungskomponente (20) enthalten ist; wobei der Dielektrische-Barriereentladung-Plasmaaktuator (60) so positioniert ist, dass er bei Betätigung einen Plasmastrahl (78) über die Außenfläche (16) des Transportfahrzeugs (18) bereitstellt; und wobei das elektronische Steuermodul (450) und der Sensor (454) zum Betätigen des Dielektrische-Barriereentladung-Plasmaaktuator (60) bei einer instabilen Aktuatorfrequenz gekoppelt sind, die basierend auf der Geschwindigkeit eines Transportfahrzeugs (18) und dem Abstand der Dielektrische-Barriereentladung-Plasmaaktuatorelektrode von der Hinterkante des Transportfahrzeugs (18) als Reaktion auf eine vorgewählte Reihe von Bedingungen bestimmt wird, einschließlich der Geschwindigkeit des Transportfahrzeugs, die einen vorbestimmten Schwellenwert überschreitet, unter der sich der Luftwiderstand erhöht.

2. Vorrichtung zum Reduzieren des Luftwiderstands nach Anspruch 1, **dadurch gekennzeichnet, dass** die Abdeckungskomponente (20) eine diskrete Platte umfasst, die mit einem entsprechenden Abschnitt der Außenfläche (16) des Transportfahrzeugs (18) zusammenpasst.

3. Vorrichtung zum Reduzieren des Luftwiderstands nach Anspruch 1, **dadurch gekennzeichnet, dass** die Abdeckungskomponente (20) einteilig mit der Außenfläche (16) des Transportfahrzeugs (18) ist.

4. Vorrichtung zum Reduzieren des Luftwiderstands nach Anspruch 1, **dadurch gekennzeichnet, dass** eine Vielzahl von Plasmaaktuatoren (60) in einer Plasmaaktuator-Anordnung (700) angeordnet sind, die eine Vielzahl von Dielektrische-Barriereentladung-Plasmaaktuatoren (60) umfasst.

5. Vorrichtung zum Reduzieren des Luftwiderstands nach Anspruch 4, **dadurch gekennzeichnet, dass** die Plasmaaktuator-Anordnung (700) so positioniert ist, dass sie tangentiale Plasmastrahlen (78) richtet, um die Strömungsablösung von der Abdeckungskomponente (20) zu verhindern.

6. Vorrichtung zum Reduzieren des Luftwiderstands nach Anspruch 5, **dadurch gekennzeichnet, dass** die Plasmaaktuatoren (60) jeweils einen Dielektrische-Barriereentladung-Aktuator vom String-Typ umfassen, und **dadurch gekennzeichnet, dass** sich die Plasmaaktuator-Anordnung (700) über eine Abmessung der Abdeckungskomponente (20) erstreckt, die in einer im Wesentlichen normalen Richtung zur Fluidströmung (4) angeordnet ist, die sich aus der Vorwärtsbewegung des Transportfahrzeugs (18) ergibt.

7. Vorrichtung zum Reduzieren des Luftwiderstands nach Anspruch 6, **dadurch gekennzeichnet, dass** ein Strömungssensor (530) an einer Hinterkante des Transportfahrzeugs (18) positioniert ist, um auf Bedingungen der Grenzschichtablösung zu reagieren.

8. Vorrichtung zum Reduzieren des Luftwiderstands nach Anspruch 7, **dadurch gekennzeichnet, dass** die Abdeckungskomponente (20) einer Kofferraumabdeckung (49) des Transportfahrzeugs (18) entspricht, und wobei der Strömungssensor (530) einen Sensor (530) umfasst, der auf die Fluidströmung (4) an einer Referenzposition einer hinteren Fläche an einer Hinterkante (550) des Transportfahrzeugs (18) in einer Sensorhöhe reagiert, wobei die Sensorhöhe geringer ist als eine Höhe einer Grenzschicht für eine laminare Strömung an der hinteren Fläche ist.

9. Vorrichtung zum Reduzieren des Luftwiderstands nach Anspruch 8, **dadurch gekennzeichnet, dass** der Strömungssensor (530) ein symmetrisches Flügelprofil (500) an der Referenzposition und auf der Sensorhöhe positioniert sowie einen Faser-Bragg-Gitter-Sensor in dem Strömungssensor (530) umfasst, der an einer Innenfläche eines freitragenden Balkens (534) befestigt ist, wobei der freitragende Balken (534) eine Spitze (540) aufweist, die montiert ist, um auf die Strömung an einer Hinterkante (550) des symmetrischen Flügelprofils (500) so zu reagieren, dass die Durchbiegung des freitragenden Balkens (534) als Reaktion auf die Strömungsablösung an der hinteren Fläche im Wesentlichen aufhört.

10. Vorrichtung zum Reduzieren des Luftwiderstands nach Anspruch 9, **dadurch gekennzeichnet, dass** das elektronische Steuermodul (450) die Plasmaaktuator-Anordnung (700) mit einer Frequenz aktiviert, die der Geschwindigkeit eines Transportfahrzeugs (18) geteilt durch einen von der Plasmaaktuator-Anordnung (700) bis zur Hinterkante des Transportfahrzeugs (18) gemessenen Abstand entspricht.

11. Vorrichtung zum Reduzieren des Luftwiderstands nach einem der vorhergehenden Ansprüche, **dadurch gekennzeichnet, dass** die oder jede Solaranordnung (300) Gleichstrom erzeugt, der durch eine Gleichstrom-Kombinationsbox (414) zu einem integrierten Batterie-Rack (410) geleitet wird; ein Aufwärtswandler (420) mit dem integrierten Batterie-Rack und dem elektronischen Steuermodul (450) verbunden ist, wobei der Aufwärtswandler dazu eingerichtet ist, 12 V in 24 V umzuwandeln und das elektronische Steuermodul zu versorgen, wobei das elektronische Steuermodul mit dem ersten Dielektrische-Barriereentladung-Plasmaaktuator (60) verbunden und dazu eingerichtet ist, es über ein geschlossenes Regelkreissystem zu steuern.

12. Verfahren zum Reduzieren des Luftwiderstands und zum Erhöhen der Energieeffizienz eines Transportfahrzeugs (18), umfassend das Bereitstellen einer Abdeckungskomponente (20) an einem Abschnitt einer Außenfläche (16) des Transportfahrzeugs (18), an dem ein Abschnitt (20) zur Strömungsablösungshemmung vorgesehen sein muss, um den aerodynamischen Luftwiderstand zu reduzieren, und das Bereitstellen einer Solaranordnung (300) in der Abdeckungskomponente (20), und das Bereitstellen einer elektrischen Schaltung (400) für ein Transportfahrzeug (18), wobei die Schritte des Überwachens der Fluidströmung (4) an einer Stelle durchgeführt werden, an der eine Verwirbelung auf einen aerodynamischen Luftwiderstand hindeuten würde, wobei die Schritte des Platzierens eines Faser-Bragg-Gitters (530) an der Stelle, des Überwachens einer Ausgabe des Faser-Bragg-Gitters (53) und des Vergleichens der Ausgabe mit einem Bereich, der auf die Bildung der Ablöseschicht (2) hindeutet, und

des Betätigens einer Plasmaaktuator-Anordnung (700) als Reaktion auf eine Anzeige der Bildung der Ablöseschicht (2) angewendet werden, und wobei die elektronische Schaltung auf die Geschwindigkeit des Fahrzeugs (18) reagiert und die Plasmaaktuator-Anordnung (700) mit einer instabilen Frequenz aktiviert, die der Geschwindigkeit des Transportfahrzeugs (18) geteilt durch einen von der Plasmaaktuator-Anordnung (700) zu einer Hinterkante der Abdeckungskomponente (20) gemessenen Abstand entspricht.

13. Verfahren zum Reduzieren des Luftwiderstands und zum Erhöhen der Energieeffizienz nach Anspruch 12, **dadurch gekennzeichnet, dass** erste und zweite Kategorien von Abdeckungskomponenten (20) erkannt werden, wobei eine erste Kategorie Abdeckungskomponenten (20) an Stellen umfasst, an denen eine Strömungsablösung nicht gemindert werden muss, und eine zweite Kategorie, in der eine Strömungsablösung erforderlich ist, um den Druckwiderstand zu mindern, und dass eine Plasmaaktuator-Anordnung (700) aktiviert wird, um spannweitige Wanderwellen in der ersten Kategorie von Abdeckungskomponenten (20) zu erzeugen.

14. Verfahren nach Anspruch 13, ferner umfassend das Bereitstellen von Dielektrische-Barriereentladung-Aktuatoren vom String-Typ (60) in der Plasmaaktuator-Anordnung (700).

15. Verfahren nach Anspruch 13, ferner umfassend das Deaktivieren der Plasmaaktuator-Anordnung (700) als Reaktion darauf umfasst, dass die Geschwindigkeit des Transportfahrzeugs (18) unter dem vorgewählten Schwellenwert liegt.

**Revendications**

1. Appareil de réduction de la traînée dans un véhicule (18) de transport présentant une surface extérieure (16) et comprenant un premier actionneur plasma de barrière à décharge diélectrique (60) pour fournir un jet de plasma (78), au moins un réseau solaire (300), un module de commande électronique (450) et un capteur (454) pour l'actionnement dudit actionneur plasma de barrière à décharge diélectrique (60) dans lequel ledit appareil comprend en outre un composant de capot (20) formé pour être solidaire de ladite surface extérieure (16) et disposé en alignement avec une zone de ladite surface extérieure (16) et dans lequel ledit réseau solaire (300) est inclus dans ledit composant de capot (20) ; ledit actionneur plasma de barrière à décharge diélectrique (60) étant positionné pour fournir un jet de plasma (78) sur la surface extérieure (16) dudit véhicule (18) de transport lorsqu'il est actionné ; et dans lequel le module de commande électronique (450) et le capteur (454) sont couplés pour actionner ledit actionneur plasma de barrière à décharge diélectrique (60) à une fréquence d'actionneur instable déterminée sur la base de la vitesse d'un véhicule (18) de transport et de la distance de ladite électrode d'actionneur plasma de barrière à décharge diélectrique à partir du bord de fuite du véhicule (18) de transport en réponse à un ensemble présélectionné de conditions, comprenant le dépassement par la vitesse du véhicule de transport **d'un** seuil prédéterminé en dessous duquel la traînée va augmenter.

2. Appareil de réduction de la traînée selon la revendication 1 **caractérisé en ce que** ledit composant de capot (20) comprend un panneau discret qui s'emboîte avec une partie correspondante de la surface extérieure (16) dudit véhicule (18) de transport.

3. Appareil de réduction de la traînée selon la revendication 1 **caractérisé en ce que** ledit composant de capot (20) est solidaire de la surface extérieure (16) du véhicule (18) de transport.

4. Appareil de réduction de la traînée selon la revendication 1 **caractérisé en ce qu'**une pluralité d'actionneurs plasma (60) sont agencés dans un réseau d'actionneurs plasma (700) comprenant une pluralité d'actionneurs plasma de barrière à décharge diélectrique (60).

5. Appareil de réduction de traînée selon la revendication 4 **caractérisé en ce que** ledit réseau d'actionneurs plasma (700) est positionné pour diriger des jets de plasma (78) tangentiels pour inhiber une séparation d'écoulement à partir dudit composant de capot (20).

6. Appareil de réduction de la traînée selon la revendication 5 **caractérisé en ce que** lesdits actionneurs plasma (60) comprennent chacun un actionneur de décharge à barrière diélectrique de type chaîne et **caractérisé en ce que** le réseau d'actionneurs plasma (700) s'étend sur une dimension dudit composant de capot (20) disposé dans une direction sensiblement normale à l'écoulement de fluide (4) résultant du mouvement vers l'avant dudit véhicule (18) de transport.

7. Appareil de réduction de la traînée selon la revendication 6 **caractérisé en ce qu'**un capteur de débit (530) est positionné pour répondre à des conditions de séparation de couche limite au niveau d'un bord arrière dudit véhicule (18) de transport.

8. Appareil de réduction de la traînée selon la revendication 7 **caractérisé en ce que** ledit composant de capot (20) correspond à un capot de coffre (49) dudit véhicule (18) de transport et dans lequel ledit capteur de débit (530) comprend un capteur (530) répondant à un débit de fluide (4) au niveau d'une position de référence d'une surface de fuite au niveau d'un bord de fuite (550) du véhicule (18) de transport à une hauteur de capteur, la hauteur de capteur étant inférieure à une hauteur d'une couche limite d'écoulement laminaire pour la surface de fuite.

9. Appareil de réduction de la traînée selon la revendication 8 **caractérisé en ce que** le capteur d'écoulement (530) comprend un aileron symétrique (500) au niveau de la position de référence et positionné à la hauteur du capteur et un capteur de fibres à réseau de Bragg dans ledit capteur d'écoulement (530) fixé à une surface intérieure d'une poutre en porte-à-faux (534), la poutre en porte-à-faux (534) présentant une pointe (540) montée pour répondre à l'écoulement au niveau d'un bord de fuite (550) dudit aileron symétrique (500) de sorte que la flexion de ladite poutre en porte-à-faux (534) cesse sensiblement en réponse à la séparation d'écoulement au niveau de la surface de fuite.

10. Appareil de réduction de la traînée selon la revendication 9 **caractérisé en ce que** ledit module de commande électronique (450) active ledit réseau d'actionneurs plasma (700) à une fréquence égale à la vitesse d'un véhicule (18) de transport divisée par une distance mesurée entre le réseau d'actionneurs plasma (700) et le bord de fuite du véhicule (18) de transport.

11. Appareil de réduction de la traînée selon l'une quelconque des revendications précédentes **caractérisé en ce que** le ou chaque panneau solaire (300) génère de l'électricité en CC qui est acheminée vers un support de batterie embarqué (410) à travers un boîtier combinateur en CC (414) ; un convertisseur élévateur (420) est connecté au support de batterie embarqué et au module de commande électronique (450), le convertisseur élévateur étant configuré pour convertir 12 V en 24 V et alimenter le module de commande électronique, le module de commande électronique étant connecté à et configuré pour commander le premier actionneur plasma de barrière à décharge diélectrique (60) par le biais d'un système en boucle fermée.

12. Procédé de réduction de la traînée et d'augmentation de l'efficacité énergétique d'un véhicule (18) de transport comprenant la fourniture d'un composant de capot (20) au niveau d'une section d'une surface extérieure (16) du véhicule (18) de transport, section (20) au niveau de laquelle une inhibition de séparation d'écoulement doit être fournie afin de réduire la traînée aérodynamique, et la fourniture d'un réseau solaire (300) dans le composant de capot (20), et la fourniture d'un circuit électrique (400) de véhicule (18) de transport dans lequel les étapes de surveillance de l'écoulement de fluide (4) sont réalisées au niveau d'un emplacement où un sillage serait indicatif d'une traînée aérodynamique, dans lequel les étapes sont utilisées pour placer un réseau de Bragg de fibre (530) au niveau de l'emplacement ; la surveillance d'une sortie du réseau de Bragg de fibre (53) et la comparaison de la sortie à une plage indicative de la formation de la couche de séparation (2) ; et

l'actionnement d'un réseau d'actionneurs plasma (700) en réponse à une indication de formation de la couche de séparation (2), et dans lequel le circuit électronique répond à la vitesse du véhicule (18) et active ledit réseau d'actionneurs plasma (700) à une fréquence instable égale à la vitesse du véhicule (18) de transport divisée par une distance mesurée du réseau d'actionneurs plasma (700) à un bord de fuite du composant de capot (20).

13. Procédé de réduction de la traînée et d'augmentation de l'efficacité énergétique selon la revendication 12 **caractérisé en ce que** les première et seconde catégories de composants de capot (20) sont reconnues, une première catégorie comprenant des composants de capot (20) au niveau d'emplacements où une atténuation de la séparation d'écoulement n'est pas requise, et une seconde catégorie dans laquelle une séparation d'écoulement est requise pour atténuer la traînée de pression, et l'activation d'un réseau d'actionneurs plasma (700) pour générer des ondes de déplacement transversal dans ladite première catégorie de composants de capot (20).

14. Procédé selon la revendication 13 comprenant en outre la fourniture d'actionneurs plasma de décharge de barrière diélectrique (60) de type chaîne dans ledit réseau d'actionneurs plasma (700).

15. Procédé selon la revendication 13 comprenant en outre la désactivation dudit réseau d'actionneurs plasma (700) en réponse à une vitesse du véhicule (18) de transport inférieure au seuil présélectionné.

FIG. 1

FIG. 2

FIG. 3

FIG. 4

FIG. 5

FIG. 6

FIG.7

FIG. 8

EP 3 873 794 B1

520

550

540

545

530

500

FIG. 9

FIG. 10

EP 3 873 794 B1

FIG. 11

EP 3 873 794 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9951800 B
- US 9821862 B
- US 20180065690 A
- US 6517148 B1
- US 6474729 B2
- US 6337436 B1
- US 5545261 A
- US 5154481 A
- US 6155636 A
- US 8641127 B2